# EUROPÄISCHE PATENTSCHRIFT

(11) **EP 0 811 627 B1**
(45) Veröffentlichungstag und Bekanntmachung des Hinweises auf die Patenterteilung: **25.07.2007**
(21) Anmeldenummer: 97108454.6
(22) Anmeldetag: 26.05.1997
(51) Int. Cl.: C07F 5/02, C07F 7/08, C07F 17/00, C08F 10/00

(54) **Chemische Verbindung, neutral oder ionisch aufgebaut, geeignet als Katalysatorkomponente für die Olefinpolymerisation**
Neutral or ionic compound suitable as catalyst component for olefin polymerization
Composé neutre ou ionique pour un composant d'un catalyseur pour la polymérisation d'oléfines

(30) Priorität: 03.06.1996 DE 19622207
(43) Veröffentlichungstag der Anmeldung: 10.12.1997
(73) Patentinhaber: Basell Polyolefine GmbH, 50389 Wesseling (DE)
(72) Erfinder: Fritze, Cornelia, Dr., 60529 Frankfurt (DE); Küber Frank, Dr., 61440 Oberursel (DE); Bohnen, Hans, Dr., 65527 Niedernhausen (DE)

(56) Entgegenhaltungen:
- EP-A- 0 824 113
- WO-A-95/24269
- WO-A-97/15581
- US-A- 5 496 960
- PAETZOLD, PETER ET AL: "Boron imides in the thermal decomposition of diarylazidoboranes" CHEM. BER. ( 1983 ), 116(4), 1531-9, XP002119538

## Beschreibung

### Chemische Verbindung

Die vorliegende Erfindung betrifft eine chemische Verbindung, welche neutral oder ionisch aufgebaut sein kann. In Kombination mit einem Metallocen kann diese ein neues Katalysatorsystem bilden, welches vorteilhaft zur Polymerisation von Olefinen eingesetzt wird. Hierbei kann auf die Verwendung von Aluminoxanen wie Methylaluminoxan (MAO) als Cokatalysator verzichtet werden und dennoch hohe Katalysatoraktivitäten erzielt werden.

Die Rolle von kationischen Komplexen bei der Ziegler-Natta-Polymerisation mit Metallocenen ist allgemein anerkannt (M. Bochmann, Nachr. Chem. Lab. Techn. 1993, 41, 1220). MAO als bislang wirksamster Co-Katalysator hat den Nachteil in hohem Überschuß eingesetzt zu werden. Die Darstellung kationischer Alkylkomplexe eröffnet den Weg MAO-freier Katalysatoren mit vergleichbarer Aktivität.

Die Synthese kationischer Alkylkomplexe gelingt durch
a) Protolyse von Metallocenverbindungen mit beispielsweise schwach sauren Ammoniumsalzen des sehr stabilen, nicht basischen Tetra(pentafluorophenyl)-boratanions (z.B. [PhMe₂NH]⁺[B(C₆F₅)₄]⁻),
b) durch Abstraktion einer Alkylgruppe aus Metallocenverbindungen mit Hilfe von starken Lewis-Säuren, wobei als Lewis-Säuren sowohl Salze der Form (Ph₃C⁺BR₄⁻) als auch starke, neutrale Lewis-Säuren wie B(C₆F₅)₃ dienen können oder durch
c) Oxidation von Metallocendialkyl-Komplexen mit beispielsweise AgBPh₄ oder [Cp₂Fe][BPh₄].

Die Synthese von "Kationen-ähnlichen" Metallocen-Polymerisationskatalysatoren, wird im J. Am. Chem. Soc. 1991, 113, 3623 beschrieben. Darin erfolgt die Alkylabstraktion von einer Metallocenalkylverbindung mittels Tris(pentafluorphenyl)boran.
In EP 427 697 wird dieses Syntheseprinzip und ein entsprechendes Katalysatorsystem, bestehend aus einer neutralen Metallocenspezies (z. B. Cp₂ZrMe₂), einer Lewis-Säure (z. B. B(C₆F₅)₃) und Aluminiumalkylen beansprucht. Ein Verfahren zur Herstellung von Salzen der allgemeinen Form LMX⁺ XA⁻ nach dem oben beschriebenen Prinzip wird in EP 520 732 beansprucht.

EP 558 158 beschreibt zwitterionische Katalysatorsysteme, die aus Metallocendialkyl-Verbindungen und Salzen der Form [R₃NH]⁺[BPh₄]⁻ dargestellt werden. Die Umsetzung eines solchen Salzes mit z. B. Cp₂*ZrMe₂ liefert durch Protolyse unter Methanabspaltung intermediär ein Zirkonocenmethyl-Kation. Dieses reagiert über C-H-Aktivierung zum Zwitterion Cp₂*Zr⁺-(m-C₆H₄)-BPh₃⁻ab. Das Zr-Atom ist dabei kovalent an ein Kohlenstoffatom des Phenylringes gebunden und wird über eine agostische Wasserstoffbindung stabilisiert.

Nach diesem Reaktionsprinzip entsteht nach der Protolyse einer Metallocendialkylspezies mit einem perfluorierten [R₃NH]⁺[B(C₆F₅)₄]⁻-Salz im ersten Schritt ebenfalls eine kationische Spezies, wobei nun die Folgereaktion (C-H-Aktivierung) zu zwitterionischen Komplexen nicht möglich ist. Es entstehen so Salze der Form [Cp₂Zr-R-RH]⁺[B(C₆F₅)₄]⁻. In US 5,348,299 werden entsprechende Systeme beansprucht, wobei Dimethylaniliniumsalze mit perfluorierten Tetraphenylboratanionen verwendet werden.

Nachteil der beschriebenen Systeme ist, daß nach der Protolyse aus den Ammoniumsalzen ein Amin entsteht, welches an das stark lewis-saure Kation koordiniert und somit nicht polymerisationsaktiv ist.

In EP 426 637 wird ein Verfahren beschrieben in dem das lewis-saure CPh₃⁺ Kation eingesetzt wird. Als schwach koordinierendes Anion fungiert B(C₆F₅)₄⁻. Dies bietet den Vorteil, daß nach Abstraktion einer CH₃-Gruppe das entstandene CH₃CPh₃ keine koordinativen Eigenschaften mehr besitzt. Somit können auch von sterisch ungehinderten Metallzentren kationische Komplexe dargestellt werden.

In WO 95/14044 sind Carboborane als Bestandteile von Katalysatorsystemen beschrieben.

Diborane, welche über ein Wasserstoffatom und eine Alkyl-Gruppe verbrückt sind, werden in WO 95/24269 beschrieben. Diese Systeme haben den Nachteil, daß die darin enthaltenen H-aciden Funktionen eine Wechselwirkung mit dem kationischen System nicht ausschließen.

Die Aufgabe bestand darin eine chemische Verbindung mit geringer Koordinationsneigung zu finden, welche die Nachteile des Standes der Technik vermeidet.

Die vorliegende Erfindung betrifft somit eine chemische Verbindung, sowie ein Verfahren zur Herstellung dieser chemischen Verbindung. Ferner betrifft sie ein Katalysatorsystem enthaltend mindestens ein Metallocen und mindestens eine erfindungsgemäße chemische Verbindung als Co-Katalysator. Zudem wird ein Verfahren zur Herstellung von Polyolefinen beschrieben.

Die erfindungsgemäße chemische Verbindung entspricht der allgemeinen Formel: 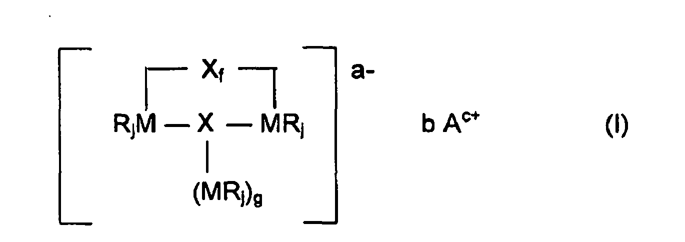 worin,
- R: unabhängig voneinander gleich oder verschieden ein Halogenatom oder ein halogenierter C₁-C₄₀-Kohlenwasserstoffrest sind, wie eine C₁-C₄₀-Halogen- Alkyl-, C₆-C₄₀- Halogen-Aryl- oder C₇-C₄₀-Halogen-Arylalkylgruppe,
- X: unabhängig voneinander gleich oder verschieden eine C₁-C₄₀-Halogen-Alkylen-, C₆-C₄₀-Arylen-, C₆-C₄₀-Halogen-Arylen-, C₇-C₄₀-Arylalkylen- oder C₇-C₄₀-Halogen-Arylalkylen-, C₂-C₄₀-Alkinylen-, C₂-C₄₀-Halogen-Alkinylen-, C₂-C₄₀-Alkenylen- oder C₂-C₄₀-Halogen-Alkenylen-Gruppe sind,
- M: Bor bedeutet,
- a: eine ganze Zahl von 0 bis 10 ist, b eine ganze Zahl von 0 bis 10 ist, c eine ganze Zahl von 0 bis 10 ist und a = b · c ist,
- f: gleich 0 oder 1 ist,
- g: gleich 0 oder 1 ist,
- j: 2 oder 3 ist und
- A: ein Kation der Gruppe Ia, IIa, IIIa des Periodensystems der Elemente, ein Carbenium-, Oxonium- oder Sulfonium-Kation oder eine quartäre Ammonium-Verbindung ist.
Ammonium-Verbindung ist.

Wenn a = 0 ist, so handelt es sich um eine neutrale chemische Verbindung; wenn a ≥ 1 ist, so handelt es sich um eine negativ geladene Verbindung mit b Kationen A^{c+} als Gegenion.

Weist die chemische Verbindung der Formel I mehrere Gruppen MRⱼ auf, so können diese gleich oder voneinander verschieden sein.

Die Struktureinheit X verbindet die Elemente M durch kovalente Bildungen miteinander. X kann ein lineares, cyclisches oder verzweigtes Kohlenstoffgerüst aufweisen.

R ist bevorzugt ein C₁-C₄₀-Kohlenwasserstoffrest, der mit Halogenen wie Fluor, Chlor, Brom oder Iod halogeniert bevorzugt perhalogeniert sein kann, insbesondere eine halogenierte, insbesondere perhalogenierte C₁-C₃₀-Alkylgruppe wie Trifluormethyl, Pentachlorethyl, Heptafluorisopropyl oder Monofluorisobutyl oder eine halogenierte, insbesondere perhalogenierte C₆-C₃₀-Arylgruppe wie Pentafluorphenyl, Heptachlornaphthyl, Heptafluornaphthyl, 1,2,3-Trifluorphenyl, 1,3,5-Trifluorphenyl, Heptafluortolyl, 3,5-bis(trifluormethyl)phenyl, 2,4,6-tris(trifluormethyl)phenyl oder 2,2' (octafluor)biphenyl. X ist bevorzugt eine C₆-C₃₀-Arylengruppe, eine C₂-C₃₀-Alkenylengruppe oder eine C₂-C₃₀-Alkinylengruppe, die halogeniert, insbesondere perhalogeniert sein kann.

a, b und c sind bevorzugt 0,1 oder 2.

Bevorzugt ist g gleich 0.
Als A sind Carbenium-ionen (R₃C⁺) oder quartäre Ammonium-lonen mit einer aciden H-Funktion (R₃NH⁺) bevorzugt. Besonders bevorzugt sind quartäre Ammoniumsalze mit aciden H-Funktionen.

Für den Fall, daß a ≥ 1 und alle M gleich Bor sind, ist es bevorzugt, daß die Anzahl der Boratome ≤ 4, besonders bevorzugt gleich 2 ist.

Beispiele für die erfindungsgemäße chemische Verbindung sind:

(C₆F₅)₂B-C≡C-B(C₆F₅)₂

(C₆F₅)₂B-FC=CF-B(C₆F₅)₂

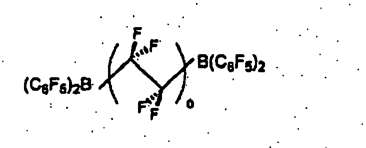

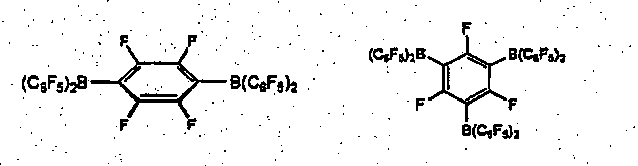

(C₆F₅)₂B-C≡C-SiMe₃

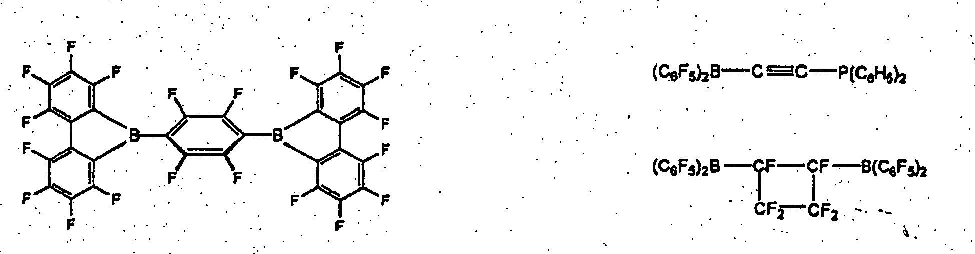

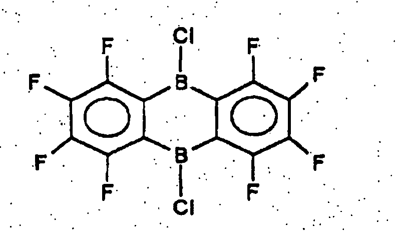

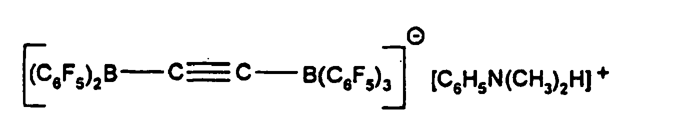

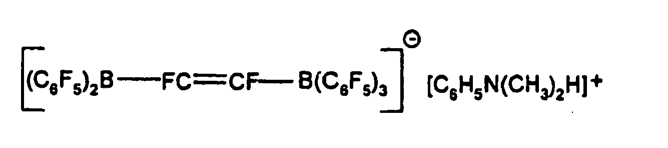

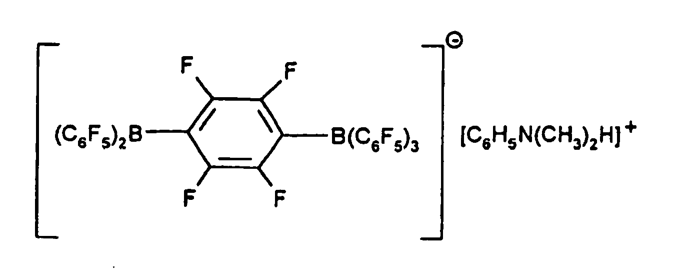

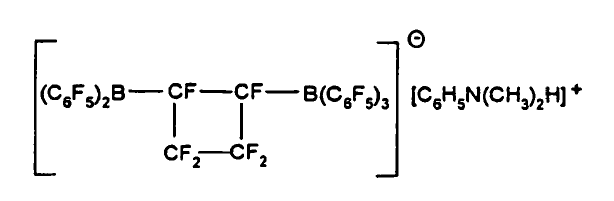

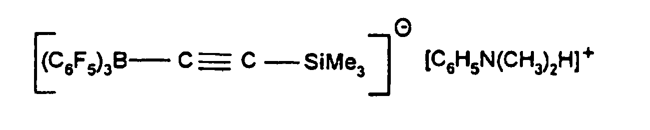

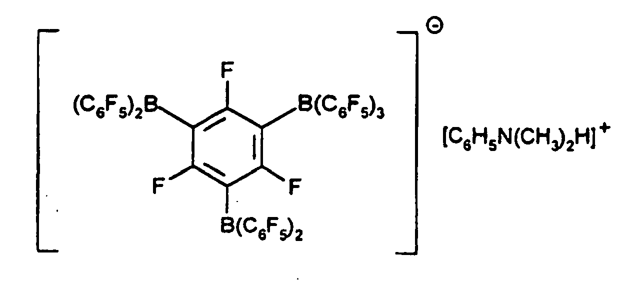

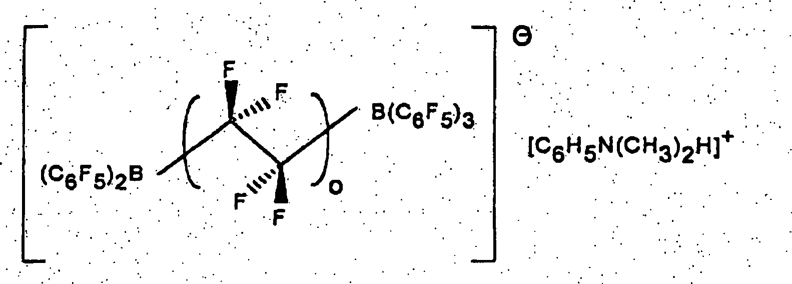

Anstelle des N,N-Dimethylanilinium-Kations [C₆H₅N(CH₃)₂H]⁺ kann alternativ CPh₃⁺ als Kation eingesetzt werden

Die Herstellung einer erfindungsgemäßen chemische Verbindung kann z.B. nach folgendemReaktionsschema ablaufen:

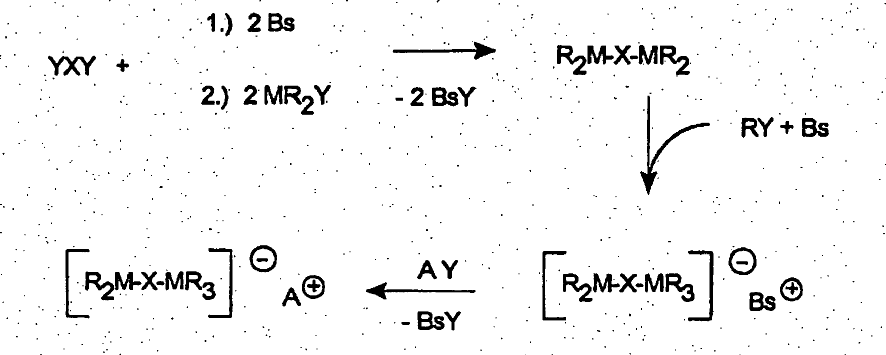

Hierbei ist
- X: eine C₁-C₄₀-Halogen-Alkylen-, C₈-C₄₀-Arylen-, C₆-C₄₀- Halogen-Arylen-, C₇-C₄₀-Arylalkylen- oder C₇-C₄₀-Halogen-Arylalkylen-, C₂-C₄₀-Alkinylen-, C₂-C₄₀-Halogen-Alkinylen-,C₂-C₄₀-Alkenylen- oder C₂-C₄₀-Halogen-Alkenylen-Gruppe sind,
- Y: unabhängig voneinander gleich oder verschieden eine Abgangsgruppe, bevorzugt ein Wasserstoff- oder Halogen-Atom,
- R: unabhängig voneinander gleich oder verschieden ein Halogenatom oder ein halogenierter C₁-C₄₀-Kohlenwasserstoffrest sind, wie eine C₁-C₄₀-Halogen- Alkyl-, C₆-C₄₀- Halogen-Aryl- oder C₇-C₄₀-Halogen-Arylalkyl-Gruppe,
- Bs: eine Base, bevorzugt eine Organolithium-Verbindung oder eine Grignard-Verbindung,
- M: Bor bedeutet und
- A: ein Kation der Gruppe la, IIa, IIIa, des Periodensystems der Elemente, ein Carbenium-, Oxonium- oder Sulfonium-Kation oder eine quartäre Ammonium-Verbindung ist.

Die erfindungsgemäße chemische Verbindung kann zusammen mit Metallocenen als Katalysatorsystem verwendet werden. Metallocene enthalten mindestens ein Metallzentralatom, an das mindestens ein π-Ligand, z. B. Cyclopentadienylligand gebunden ist. Bevorzugt sind chirale Metallocene. Darüber hinaus können weitere Substituenten, wie z. B. Halogen-, Alkyl-, Alkoxy- oder Aryl-Gruppen an das Metallzentralatom gebunden sein. Das Metallzentralatom ist bevorzugt ein Element der-III., IV., V. oder VI. Nebengruppe des Periodensystems der Elemente, insbesondere aus der IV. Nebengruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl, Indenyl, 2-Methylindenyl, 2-Methyl-4-phenylindenyl, Tetrahydroindenyl, Benzoindenyl, Fluorenyl, Benzofluorenyl, Tetrahydrofluorenyl, Octahydrofluorenylreste zu verstehen. Die π-Liganden, z. B. Cyclopentadienylliganden können verbrückt oder unverbrückt sein, wobei einfache und mehrfache Verbrückungen - auch über Ringsysteme - möglich sind. Die Bezeichnung Metallocen umfaßt auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkerniger Metallocene können sowohl gleichartig, als auch voneinander verschieden sein. Beispiele solcher mehrkerniger Metallocene sind z. B. beschrieben in (EP-A-632063, JP-A-04/80214, JP-A-04/85310, EP-A-654476).

Besonders bevorzugt sind unverbrückte oder verbrückte Metallocene der Formel II, 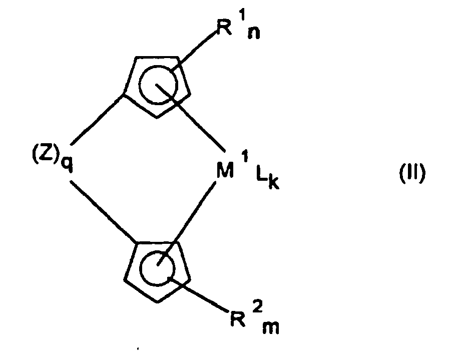 , worin
- M1: ein Metall der III., IV., V. oder VI. Nebengruppe des Periodensystems der Elemente ist, insbesondere Zr oder Hf,
- R¹: gleich oder verschieden sind und ein Wasserstoffatom, SiR³, worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹ können so miteinander verbunden sein, daß die Reste R¹ und die sie verbindenden Atome des Cyclopentadienylringes ein C₄-C₂₄-Ringsystem bilden, welches seinerseits substituiert sein kann,
- R²: gleich oder verschieden sind und ein Wasserstoffatom, SiR³ , worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R² können so miteinander verbunden sein, daß die Reste R² und die sie verbindenden Atome des Cyclopentadienylringes ein C₄-C₂₄-Ringsystem bilden, welches seinerseits substituiert sein kann,
- n: gleich 5 für q = 0, und n gleich 4 für q = 1 ist,
- m: gleich 5 für q = 0, und m gleich 4 für q = 1 ist,
- L: gleich oder verschieden sind und ein Halogenatom oder einen kohlenwasserstoffhaltigen Rest mit 1-20 Kohlenstoffatomen bedeuten, z. B. C₁-C₂₀-Alkyl, C₂-C₂₀-Alkenyl, C₁-C₂₀-Alkoxy, C₆-C₁₄-Aryloxy oder C₆-C₄₀-Aryl,
- k: eine ganze Zahl von 1 bis 4 ist, wobei im Falle von M¹ = Ti, Zr oder Hf k bevorzugt gleich 2 ist,
- Z: ein verbrückendes Strukturelement zwischen den beiden Cyclopentadienylringen bezeichnet, und q ist 0 oder 1.

Beispiele für Z sind Gruppen M²R⁴R⁵, worin M² Kohlenstoff, Silizium, Germanium oder Zinn ist und R⁴ und R⁵ gleich oder verschieden eine C₁-C₂₀-Kohlenwasserstoffgruppe wie C₁-C₁₀-Alkyl oder C₆-C₁₄-Aryl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ oder 2,2'-(C₆H₄)₂. Z kann auch mit einem oder mehreren Resten R¹ und/oder R² ein mono- oder polycyclisches Ringsystem bilden.

Bevorzugt sind chirale verbrückte Metallocene der Formel II, insbesondere solche in denen q gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können.

Die nachfolgenden Beispiele für Metallocene dienen der Illustration der vorliegenden Erfindung, haben aber keinen einschränkenden Charakter:
Bis(cyclopentadienyl)zirkoniumdimethyl
Bis(indenyl)zirkoniumdimethyl
Bis(fluorenyl)zirkoniumdimethyl
(Indenyl)(fluorenyl)zirkoniumdimethyl
(3-Methyl-5-naphthylindenyl)(2,7-di-tert-butylfluorenyl)zirkoniumdimethyl
(3-Methyl-5-naphthylindenyl)(3,4,7-trimethoxyfluorenyl)zirkoniumdimethyl
(Pentamethylcyclopentadienyl)(tetrahydroindenyl)zirkoniumdimethyl
(Cyclopentadienyl)(1-octen-8-ylcyclopentadienyl)zirkoniumdimethyl
(Indenyl)(1-buten-4-ylcyclopentadienyl)zirkoniumdimethyl
[1,3-Bis(trimethylsilyl)cyclopentadienyl](3,4-benzofluorenyl)zirkoniumdimethyl
Bis(cyclopentadienyl)titandimethyl
Dimethylsilandiylbis(indenyl)zirkoniumdimethyl
Dimethylsilandiylbis(tetrahydroindenyl)zirkoniumdimethyl
Dimethylsilandiyl(cyclopentadienyl)(indenyl)zirkoniumdimethyl
Dimethylsilandiylbis(2-methylindenyl)zirkoniumdimethyl
Dimethylsilandiylbis(2-ethylindenyl)zirkoniumdimethyl
Dimethylsilandiylbis(2-methyl-4,5-benzoindenyl)zirkoniumdimethyl
Dimethylsilandiylbis(2-ethyl-4,5-benzoindenyl)zirkoniumdimethyl
Dimethylsilandiylbis(4,5-dihydro-8-methyl-7H-cyclopent[e]acenaphthylen-7-yliden)zirkoniumdimethyl
Dimethylsilandiyl(2-methyl-4,5-benzoindenyl)(2-methyl-4-phenylindenyl)zirkoniumdimethyl
Dimethylsilandiyl(2-ethyl-4,5-benzoindenyl)(2-methyl-4-phenylindenyl)zirkoniumdimethyl
Dimethylsilandiyl(2-methyl-4,5-benzoindenyl)(2-ethyl-4-phenylindenyl)zirkoniumdimethyl
Dimethylsilandiyl(2-ethyl-4,5-benzoindenyl)(2-ethyl-4-naphthylindenyl)zirkoniumdimethyl
Dimethylsilandiyl(2-methylindenyl)(4-phenylindenyl)zirkoniumdimethyl
Dimethylsilandiylbis(2-methyl-4-phenylindenyl)zirkoniumdimethyl
Dimethylsilandiylbis(2-ethyl-4-phenylindenyl)zirkoniumdimethyl
Dimethylsilandiylbis(2-methyl-4,6-diisopropylindenyl)zirkoniumdimethyl
Dimethylsilandiylbis(2-ethyl-4,6-diisopropylindenyl)zirkoniumdimethyl
Dimethylsilandiylbis(2-methyl-4-naphthylindenyl)zirkoniumdimethyl
Dimethylsilandiylbis(2-ethyl-4-naphthylindenyl)zirkoniumdimethyl
Methylphenylsilandiylbis(indenyl)zirkoniumdimethyl
Methylphenylsilandiyl(cyclopentadienyl)(indenyl)zirkoniumdimethyl
Methylphenylsilandiylbis(tetrahydroindenyl)zirkoniumdimethyl
Methylphenylsilandiylbis(2-methylindenyl)zirkoniumdimethyl
Methylphenylsilandiylbis(2-ethylindenyl)zirkoniumdimethyl
Methylphenylsilandiylbis(2-methyl-4,5-benzoindenyl)zirkoniumdimethyl
Methylphenylsilandiylbis(2-ethyl-4,5-benzoindenyl)zirkoniumdimethyl
Methylphenylsilandiylbis(4,5-dihydro-8-methyl-7H-cyclopent(e)acenaphthylen-7-yliden)zirkoniumdimethyl
Methylphenylsilandiyl(2-methyl-4,5-benzoindenyl)(2-methyl-4-phenylindenyl)zirkoniumdimethyl
Methylphenylsilandiyl(2-ethyl-4,5-benzoindenyl)(2-methyl-4-phenylindenyl)zirkoniumdimethyl
Methylphenylsilandiyl(2-methyl-4,5-benzoindenyl)(2-ethyl-4-phenylindenyl)zirkoniumdimethyl
Methylphenylsilandiyl(2-ethyl-4,5-benzoindenyl)(2-ethyl-4-naphthylindenyl)zirkoniumdimethyl
Methylphenylsilandiyl(2-methylindenyl)(4-phenylindenyl)zirkoniumdimethyl
Methylphenylsilandiylbis(2-methyl-4-phenylindenyl)zirkoniumdimethyl
Methylphenylsilandiylbis(2-ethyl-4-phenylindenyl)zirkoniumdimethyl
Methylphenylsilandiylbis(2-methyl-4, 6-diisopropylindenyl)zirkoniumdimethyl
Methylphenylsilandiylbis(2-ethyl-4,6-diisopropylindenyl)zirkoniumdimethyl
Methylphenylsilandiylbis(2-methyl-4-naphthylindenyl)zirkoniumdimethyl
Methylphenylsilandiylbis(2-ethyl-4-naphthylindenyl)zirkoniumdimethyl
Diphenylsilandiylbis(indenyl)zirkoniumdimethyl
Diphenylsilandiylbis(2-methylindenyl)zirkoniumdimethyl
Diphenylsilandiylbis(2-ethylindenyl)zirkoniumdimethyl
Diphenylsilandiyl(cyclopentadienyl)(indenyl)zirkoniumdimethyl
Diphenylsilandiylbis(2-methyl-4,5-benzoindenyl)zirkoniumdimethyl
Diphenylsilandiylbis(2-ethyl-4,5-benzoindenyl)zirkoniumdimethyl
Diphenylsilandiyl(2-methyl-4,5-benzoindenyl)(2-methyl-4-phenylindenyl)zirkoniumdimethyl
Diphenylsilandiyl(2-ethyl-4,5-benzoindenyl)(2-methyl-4-phenylindenyl)zirkoniumdimethyl
Diphenylsilandiyl(2-methyl-4,5-benzoindenyl)(2-ethyl-4-phenylindenyl)zirkoniumdimethyl
Diphenylsilandiyl(2-ethyl-4,5-benzoindenyl)(2-ethyl-4-naphthylindenyl)zirkoniumdimethyl
Diphenylsilandiyl(2-methylindenyl)(4-phenylindenyl)zirkoniumdimethyl
Diphenylsilandiylbis(2-methyl-4-phenylindenyl)zirkoniumdimethyl
Diphenylsilandiylbis(2-ethyl-4-phenylindenyl)zirkoniumdimethyl
Diphenylsilandiylbis(2-methyl-4,6-diisopropylindenyl)zirkoniumdimethyl
Diphenylsilandiylbis(2-ethyl-4, 6-diisopropylindenyl)zirkoniumdimethyl
Diphenylsilandiylbis(2-methyl-4-naphthylindenyl)zirkoniumdimethyl
Diphenylsilandiylbis(2-ethyl-4-naphthylindenyl)zirkoniumdimethyl
1-Silacyclopentan-1,1-bis(indenyl)zirkoniumdimethyl
1-Silacyclopentan-1,1-bis(2-methylindenyl)zirkoniumdimethyl
1-Silacyclopentan-1,1-bis(2-ethylindenyl)zirkoniumdimethyl
1-Silacyclopentan-1,1-bis(2-methyl-4,5-benzoindenyl)zirkoniumdimethyl
1-Silacyclopentan-1,1-bis(2-ethyl-4,5-benzoindenyl)zirkoniumdimethyl
1-Silacyclopentan-1-(2-methyl-4,5-benzoindenyl)-1-(2-methyl-4-phenylindenyl)zirkoniumdimethyl
1-Silacyclopentan-1-(2-ethyl-4, 5-benzoindenyl)-1-(2-methyl-4-phenylindenyl)zirkoniumdimethyl
1-Silacyclopentan-1-(2-methyl-4,5-benzoindenyl)-1-(2-ethyl-4-phenylindenyl)zirkoniumdimethyl
1-Silacyclopentan-1-(2-ethyl-4, 5-benzoindenyl)-1-(2-ethyl-4-naphthylindenyl)zirkoniumdimethyl
1-Silacyclopentan-1-(2-methylindenyl)-1-(4-phenylindenyl)zirkoniumdimethyl
1-Silacyclopentan-1,1-bis(2-methyl-4-phenylindenyl)zirkoniumdimethyl
1-Silacyclopentan-1,1-bis(2-ethyl-4-phenylindenyl)zirkoniumdimethyl
1-Silacyclopentan-1,1-bis(2-methyl-4,6-diisopropylindenyl)zirkoniumdimethyl
1-Silacyclopentan-1,1-bis(2-ethyl-4,6-diisopropylindenyl)zirkoniumdimethyl
1-Silacyclopentan-1,1-bis(2-methyl-4-naphthylindenyl)zirkoniumdimethyl
1-Silacyclopentan-1,1-bis(2-ethyl-4-naphthylindenyl)zirkoniumdimethyl
Bis(cyclopentadienyl)titandimethyl
Ethylen-1,2-bis(indenyl)zirkoniumdimethyl
Ethylen-1,2-bis(tetrahydroindenyl)zirkoniumdimethyl
Ethylen-1-cyclopentadienyl-2-(1-indenyl)zirkoniumdimethyl
Ethylen-1-cyclopentadienyl-2-(2-indenyl)zirkoniumdimethyl
Ethylen-1-cyclopentadienyl-2-(2-methyl-1-indenyl)zirkoniumdimethyl
Ethylen-1,2-bis(2-methylindenyl)zirkoniumdimethyl
Ethylen-1,2-bis(2-ethylindenyl)zirkoniumdimethyl
Ethylen-1,2-bis(2-methyl-4,5-benzoindenyl)zirkoniumdimethyl
Ethylen-1,2-bis(2-ethyl-4,5-benzoindenyl)zirkoniumdimethyl
Ethylen-1,2-bis(4,5-dihydro-8-methyl-7H-cyclopent[e]acenaphthylen-7-yliden)zirkoniumdimethyl
Ethylen-1-(2-methyl-4,5-benzoindenyl)-2-(2-methyl-4-phenylindenyl)zirkoniumdimethyl
Ethylen-1-(2-ethyl-4, 5-benzoindenyl)-2-(2-methyl-4-phenylindenyl)zirkoniumdimethyl
Ethylen-1-(2-methyl-4,5-benzoindenyl)-2-(2-ethyl-4-phenylindenyl)zirkoniumdimethyl
Ethylen-1-(2-ethyl-4,5-benzoindenyl)-2-(2-ethyl-4-naphthylindenyl)zirkoniumdimethyl
Ethylen-1-(2-methylindenyl)-2-(4-phenylindenyl)zirkoniumdimethyl
Ethylen-1,2-bis(2-methyl-4-phenylindenyl)zirkoniumdimethyl
Ethylen-1,2-bis(2-ethyl-4-phenylindenyl)zirkoniumdimethyl
Ethylen-1,2-bis(2-methyl-4,6-diisopropylindenyl)zirkoniumdimethyl
Ethylen-1,2-bis(2-ethyl-4,6-diisopropylindenyl)zirkoniumdimethyl
Ethylen-1,2-bis(2-methyl-4-naphthylindenyl)zirkoniumdimethyl
Ethylen-1,2-bis(2-ethyl-4-naphthylindenyl)zirkoniumdimethyl
Propylen-2,2-bis(indenyl)zirkoniumdimethyl
Propylen-2-cyclopentadienyl-2-(1-indenyl)zirkoniumdimethyl
Propylen-2-cyclopentadienyl-2-(4-phenyl-1-indenyl)zirkoniumdimethyl
Propylen-2-cyclopentadienyl-2-(9-fluorenyl)zirkoniumdimethyl
Propylen-2-cyclopentadienyl-2-(2,7-dimethoxy-9-fluorenyl)zirkoniumdimethyl
Propylen-2-cyclopentadienyl-2-(2,7-di-tert-butyl-9-fluorenyl)zirkoniumdimethyl
Propylen-2-cyclopentadienyl-2-(2,7-dibromo-9-fluorenyl)zirkoniumdimethyl
Propylen-2-cyclopentadienyl-2-(2,7-diphenyl-9-fluorenyl)zirkoniumdimethyl
Propylen-2-cyclopentadienyl-2-(2,7-dimethyl-9-fluorenyl)zirkoniumdimethyl
Propylen-2-(3-methylcyclopentadienyl)-2-(2,7-dibutyl-9-fluorenyl)zirkoniumdimethyl
Propylen-2-(3-tert-butylcyclopentadienyl)-2-(2,7-dibutyl-9-fluorenyl)zirkoniumdimethyl
Propylen-2-(3-trimethylsilylcyclopentadienyl)-2-(3,6-di-tert-butyl-9-fluorenyl)zirkoniumdimethyl
Propylen-2-cyclopentadienyl-2-[2,7-bis(3-buten-1-yl)-9-fluorenyl]zirkoniumdimethyl
Propylen-2-cyclopentadienyl-2-(3-tert-butyl-9-fluorenyl)zirkoniumdimethyl
Propylen-2,2-bis(tetrahydroindenyl)zirkoniumdimethyl
Propylen-2,2-bis(2-methylindenyl)zirkoniumdimethyl
Propylen-2,2-bis(2-ethylindenyl)zirkoniumdimethyl
Propylen-2,2-bis(2-methyl-4,5-benzoindenyl)zirkoniumdimethyl
Propylen-2,2-bis(2-ethyl-4,5-benzoindenyl)zirkoniumdimethyl
Propylen-2,2-bis(4,5-dihydro-8-methyl-7H-cyclopent[e]acenaphthylen-7-yliden)zirkoniumdimethyl
Propylen-2-(2-methyl-4,5-benzoindenyl)-2-(2-methyl-4-phenylindenyl)zirkoniumdimethyl
Propylen-2-(2-ethyl-4,5-benzoindenyl)-2-(2-methyl-4-phenylindenyl)zirkoniumdimethyl
Propylen-2-(2-methyl-4,5-benzoindenyl)-2-(2-ethyl-4-phenylindenyl)zirkoniumdimethyl
Propylen-2-(2-ethyl-4,5-benzoindenyl)-2-(2-ethyl-4-naphthylindenyl)zirkoniumdimethyl
Propylen-2-(2-methylindenyl)-2-(4-phenylindenyl)zirkoniumdimethyl
Propylen-2,2-bis(2-methyl-4-phenylindenyl)zirkoniumdimethyl
Propylen-2,2-bis(2-ethyl-4-phenylindenyl)zirkoniumdimethyl
Propylen-2,2-bis(2-methyl-4,6-diisopropylindenyl)zirkoniumdimethyl
Propylen-2,2-bis(2-ethyl-4,6-diisopropylindenyl)zirkoniumdimethyl
Propylen-2,2-bis(2-methyl-4-naphthylindenyl)zirkoniumdimethyl
Propylen-2,2-bis(2-ethyl-4-naphthylindenyl)zirkoniumdimethyl
1,6-Bis[methylsilylbis(2-methyl-4-phenylindenyl)zirkoniumdimethyl]hexan
1, 6-Bis[methylsilylbis(2-methyl-4,5-benzoindenyl)zirkoniumdimethyl]hexan
1,6-Bis[methylsilylbis(2-ethyl-4-phenylindenyl)zirkoniumdimethyl]hexan
1,6-Bis[methylsilylbis(2-methyl-4-naphthylindenyl)zirkoniumdimethyl]hexan
1,6-Bis[methylsilylbis(2-methyl-4,6-diisopropylindenyl)zirkoniumdimethyl]hexan
1,6-Bis[methylsilyl(2-methyl-4-phenylindenyl)(4,5-benzoindenyl)zirkoniumdimethyl]hexan
1-[Methylsilylbis(tetrahydroindenyl)zirkoniumdimethyl]-6-[ethylstannyl(cyclopentadienyl)-(fluorenyl)zirkoniumdimethyl]hexan
1,6-Disila-1,1,6,6-tetramethyl-1,6-bis[methylsilylbis(2-methyl-4-phenylindenyl)zirkonium-dimethyl]hexan
1,4-Disila-1,4-bis[methylsilylbis(2-methyl-4-phenylindenyl)zirkoniumdimethyl]cyclohexan
[1,4-Bis(1-indenyl)-1,1,4,4-tetramethyl-1,4-disilabutan]bis(pentamethylcyclopentadienylzirkoniumdimethyl)
[1,4-Bis(9-fluorenyl)-1,1,4,4-tetramethyl-1,4-disilabutan]bis(cyclopentadienylzirkoniumdimethyl)
[1,4-Bis(1-indenyl)-1,1,4,4-tetramethyl-1,4-disilabutan]bis(cyclopentadienylzirkoniumdimethyl)
[1-(1-indenyl)-6-(2-phenyl-1-indenyl)-1,1,6,6-tetraethyl-1, 6-disila-4-oxahexan]bis(tert-butylcyclopentadienylzirkoniumdimethyl)
[1,10-Bis(2,3-dimethyl-1-indenyl)-1,1,10,10-tetramethyl-1,10-digermadecan]bis(2-methyl-4-phenylindenylzirkoniumdimethyl)
(1-Methyl-3-tert-butylcyclopentadienyl)(1-phenyl-4-methoxy-7-chlorofluorenyl)zirkoniumdimethyl
(4,7-Dichloroindenyl)(3,6-dimesitylfluorenyl)zirkoniumdimethyl
Bis(2,7-di-tert-butyl-9-cyclohexylfluorenyl)zirkoniumdimethyl
(2,7-Dimesitylfluorenyl)[2,7-bis(1-naphthyl)fluorenyl]zirkoniumdimethyl
Dimethylsilylbis(fluorenyl)zirkoniumdimethyl
Dibutylstannylbis(2-methylfluorenyl)zirkoniumdimethyl
1,1,2,2-Tetraethyldisilandiyl(2-methylindenyl)(4-phenylfluorenyl)zirkoniumdimethyl
Propylen-1-(2-indenyl)-2-(9-fluorenyl)zirkoniumdimethyl
1,1-Dimethyl-1-silaethylenbis(fluorenyl)zirkoniumdimethyl
[4-(Cyclopentadienyl)-4,7,7-trimethyl(tetrahydroindenyl)]zirkoniumdimethyl
[4-(Cyclopentadienyl)-4,7-dimethyl-7-phenyl(5,6-dimethyltetrahydroindenyl)]zirkoniumdimethyl
[4-(Cyclopentadienyl)-4,7-dimethyl-7-(1-naphthyl)(7-phenyltetrahydroindenyl)]zirkoniumdimethyl
[4-(Cyclopentadienyl)-4,7-dimethyl-7-butyl(6,6-diethyltetrahydroindenyl)]zirkoniumdimethyl
[4-(3-tert-Butylcyclopentadienyl)-4,7,7-trimethyl(tetrahydroindenyl)]zirkoniumdimethyl
[4-(1-Indenyl)-4,7,7-trimethyl(tetrahydroindenyl)]zirkoniumdimethyl
Bis(cyclopentadienyl)hafniumdimethyl
Bis(indenyl)vanadiumdimethyl
Bis(fluorenyl)scandiumdimethyl
(Indenyl)(fluorenyl)niobiumdimethyl
(2-Methyl-7-naphthylindenyl)(2,6-di-tert-butylfluorenyl)titandimethyl
(Pentamethylcyclopentadienyl)(tetrahydroindenyl)hafniumbromidmethyl
(Cyclopentadienyl)(1-octen-8-ylcyclopentadienyl)hafniumdimethyl
(Indenyl)(2-buten-4-ylcyclopentadienyl)titandimethyl
[1,3-Bis(trimethylsilyl)cyclopentadienyl](3,4-benzofluorenyl)niobiumdimethyl
Bis(cyclopentadienyl)titandimethyl
Dimethylsilandiylbis(indenyl)titandimethyl
Dimethylsilandiylbis(tetrahydroindenyl)hafniumdimethyl
Dimethylsilandiyl(cyclopentadienyl)(indenyl)titandimethyl
Dimethylsilandiylbis(2-methylindenyl)hafniumdimethyl
Dimethylsilandiylbis(2-ethylindenyl)scandiummethyl
Dimethylsilandiylbis(2-butyl-4,5-benzoindenyl)niobiumdimethyl
Dimethylsilandiylbis(2-ethyl-4,5-benzoindenyl)titandimethyl
Dimethylsilandiylbis(4,5-dihydro-8-methyl-7H-cyclopent[e]acenaphthylen-7-yliden)titandimethyl
Dimethylsilandiyl(2-methyl-4,5-benzoindenyl)(2-methyl-4-phenylindenyl)titandimethyl
Dimethylsilandiyl(2-ethyl-4,5-benzoindenyl)(2-methyl-4-phenylindenyl)hafniumdimethyl
Dimethylsilandiyl(2-methyl-4,5-benzoindenyl)(2-ethyl-4-phenylindenyl)scandiummethyl
Dimethylsilandiyl(2-ethyl-4,5-benzoindenyl)(2-ethyl-4-naphthylindenyl)titandimethyl
Dimethylsilandiyl(2-methylindenyl)(4-phenylindenyl)hafniumdimethyl
Dimethylsilandiylbis(2-methyl-4-phenylindenyl)niobiumdimethyl
Dimethylsilandiylbis(2-ethyl-4-phenylindenyl)vanadiumdimethyl
Dimethylsilandiylbis(2-methyl-4,6-diisopropylindenyl)hafniumdimethyl
Dimethylsilandiylbis(2-ethyl-4,6-diisopropylindenyl)vanadiumdimethyl
Dimethylsilandiylbis(2-methyl-4-naphthylindenyl)hafniumbromidmethyl
Dimethylsilandiylbis(2-ethyl-4-naphthylindenyl)titandimethyl
Methylphenylsilandiylbis(indenyl)titandimethyl
Methylphenylsilandiyl(cyclopentadienyl)(indenyl)hafniumdimethyl
Methylphenylsilandiylbis(tetrahydroindenyl)hafniumdimethyl
Methylphenylsilandiylbis(2-methylindenyl)titandimethyl
Methylphenylsilandiylbis(2-ethylindenyl)hafniumdimethyl
Methylphenylsilandiylbis(2-methyl-4,5-benzoindenyl)hafniumdimethyl
Methylphenylsilandiylbis(2-ethyl-4,5-benzoindenyl)vanadiumdimethyl
Methylphenylsilandiylbis(4,5-dihydro-8-methyl-7H-cyclopent[e]acenaphthylen-7-yliden)titandimethyl
Methylphenylsilandiyl(2-methyl-4,5-benzoindenyl)(2-methyl-4-phenylindenyl)titanbromidmethyl
Methylphenylsilandiyl(2-ethyl-4,5-benzoindenyl)(2-methyl-4-phenylindenyl)titandimethyl
Methylphenylsilandiyl(2-methyl-4,5-benzoindenyl)(2-ethyl-4-phenylindenyl)hafniumdimethyl
Methylphenylsilandiyl(2-ethyl-4,5-benzoindenyl)(2-ethyl-4-naphthylindenyl)hafniumdimethyl
Methylphenylsilandiyl(2-methylindenyl)(4-phenylindenyl)titandimethyl
Methylphenylsilandiylbis(2-methyl-4-phenylindenyl)hafniumdimethyl
Methylphenylsilandiylbis(2-ethyl-4-phenylindenyl)vanadiumdimethyl
Methylphenylsilandiylbis(2-methyl-4,6-diisopropylindenyl)titandimethyl
Methylphenylsilandiylbis(2-ethyl-4,6-diisopropylindenyl)hafniumdimethyl
Methylphenylsilandiylbis(2-methyl-4-naphthylindenyl)hafniumdimethyl
Methylphenylsilandiylbis(2-ethyl-4-naphthylindenyl)titandimethyl
Diphenylsilandiylbis(indenyl)titandimethyl
Diphenylsilandiylbis(2-methylindenyl)hafniumdimethyl
Diphenylsilandiylbis(2-ethylindenyl)titandimethyl
Diphenylsilandiyl(cyclopentadienyl)(indenyl)hafniumdimethyl
Diphenylsilandiylbis(2-methyl-4,5-benzoindenyl)titandimethyl
Diphenylsilandiylbis(2-ethyl-4,5-benzoindenyl)hafniumdimethyl
Diphenylsilandiyl(2-methyl-4,5-benzoindenyl)(2-methyl-4-phenylindenyl)hafniumdimethyl
Diphenylsilandiyl(2-ethyl-4,5-benzoindenyl)(2-methyl-4-phenylindenyl)titandimethyl
Diphenylsilandiyl(2-methyl-4,5-benzoindenyl)(2-ethyl-4-phenylindenyl)hafniumdimethyl
Diphenylsilandiyl(2-ethyl-4,5-benzoindenyl)(2-ethyl-4-naphthylindenyl)titandimethyl
Diphenylsilandiyl(2-methylindenyl)(4-phenylindenyl)titandimethyl
Diphenylsilandiylbis(2-methyl-4-phenylindenyl)titandimethyl
Diphenylsilandiylbis(2-ethyl-4-phenylindenyl)hafniumdimethyl
Diphenylsilandiylbis(2-methyl-4,6-diisopropylindenyl)hafniumdimethyl
Diphenylsilandiylbis(2-ethyl-4,6-diisopropylindenyl)hafniumdimethyl
Diphenylsilandiylbis(2-methyl-4-naphthylindenyl)hafniumdimethyl
Diphenylsilandiylbis(2-ethyl-4-naphthylindenyl)titandimethyl
1-Silacyclopentan-1,1-bis(indenyl)hafniumdimethyl
1-Silacyclopentan-1,1-bis(2-methylindenyl)hafniumdimethyl
1-Silacyclopentan-1,1-bis(2-ethylindenyl)hafniumdimethyl
1-Silacyclopentan-1,1-bis(2-methyl-4,5-benzoindenyl)titandimethyl
1-Silacyclopentan-1,1-bis(2-ethyl-4,5-benzoindenyl)hafniumdimethyl
1-Silacyclopentan-1-(2-methyl-4,5-benzoindenyl)-1-(2-methyl-4-phenylindenyl)scandiummethyl
1-Silacyclopentan-1-(2-ethyl-4,5-benzoindenyl)-1-(2-methyl-4-phenylindenyl)hafniumdimethyl
1-Silacyclopentan-1-(2-methyl-4,5-benzoindenyl)-1-(2-ethyl-4-phenylindenyl)titandimethyl
1-Silacyclopentan-1-(2-ethyl-4,5-benzoindenyl)-1-(2-ethyl-4-naphthylindenyl)hafniumdimethyl
1-Silacyclopentan-1-(2-methylindenyl)-1-(4-phenylindenyl)hafniumdimethyl
1-Silacyclopentan-1,1-bis(2-methyl-4-phenylindenyl)hafniumdimethyl
1-Silacyclopentan-1,1-bis(2-ethyl-4-phenylindenyl)titanbromidmethyl
1-Silacyclopentan-1,1-bis(2-methyl-4,6-diisopropylindenyl)titandimethyl
1-Silacyclopentan-1,1-bis(2-ethyl-4,6-diisopropylindenyl)titandimethyl
1-Silacyclopentan-1,1-bis(2-methyl-4-naphthylindenyl)scandiummethyl
1-Silacyclopentan-1,1-bis(2-ethyl-4-naphthylindenyl)hafniumdimethyl
Bis(cyclopentadienyl)titandimethyl
Ethylen-1,2-bis(indenyl)scandiummethyl
Ethylen-1,2-bis(tetrahydroindenyl)titandimethyl
Ethylen-1-cyclopentadienyl-2-(1-indenyl)hafniumdimethyl
Ethylen-1-cyclopentadienyl-2-(2-indenyl)titanbromidmethyl
Ethylen-1-cyclopentadienyl-2-(2-methyl-1-indenyl)hafniumdimethyl
Ethylen-1,2-bis(2-methylindenyl)hafniumdimethyl
Ethylen-1,2-bis(2-ethylindenyl)hafniumdimethyl
Ethylen-1,2-bis(2-methyl-4,5-benzoindenyl)hafniumdimethyl
Ethylen-1,2-bis(2-ethyl-4,5-benzoindenyl)titandimethyl
Ethylen-1,2-bis(4,5-dihydro-8-methyl-7H-cyclopent[e]acenaphthylen-7-yliden)titandimethyl
Ethylen-1-(2-methyl-4,5-benzoindenyl)-2-(2-methyl-4-phenylindenyl)titandimethyl
Ethylen-1-(2-ethyl-4, 5-benzoindenyl)-2-(2-methyl-4-phenylindenyl)titandimethyl
Ethylen-1-(2-methyl-4,5-benzoindenyl)-2-(2-ethyl-4-phenylindenyl)scandiummethyl
Ethylen-1-(2-ethyl-4,5-benzoindenyl)-2-(2-ethyl-4-naphthylindenyl)hafniumdimethyl
Ethylen-1-(2-methylindenyl)-2-(4-phenylindenyl)titandimethyl
Ethylen-1,2-bis(2-methyl-4-phenylindenyl)hafniumdimethyl
Ethylen-1,2-bis(2-ethyl-4-phenylindenyl)hafniumdimethyl
Ethylen-1,2-bis(2-methyl-4,6-diisopropylindenyl)hafniumdimethyl
Ethylen-1,2-bis(2-ethyl-4,6-diisopropylindenyl)titandimethyl
Ethylen-1,2-bis(2-methyl-4-naphthylindenyl)titandimethyl
Ethylen-1,2-bis(2-ethyl-4-naphthylindenyl)hafniumdimethyl
Propylen-2,2-bis(indenyl)hafniumdimethyl
Propylen-2-cyclopentadienyl-2-(1-indenyl)titandimethyl
Propylen-2-cyclopentadienyl-2-(4-phenyl-1-indenyl)titandimethyl
Propylen-2-cyclopentadienyl-2-(9-fluorenyl)hafniumdimethyl
Propylen-2-cyclopentadienyl-2-(2, 7-dimethoxy-9-fluorenyl)hafniumdimethyl
Propylen-2-cyclopentadienyl-2-(2,7-di-tert-butyl-9-fluorenyl)hafniumdimethyl
Propylen-2-cyclopentadienyl-2-(2,7-dibromo-9-fluorenyl)titandimethyl
Propylen-2-cyclopentadienyl-2-(2,7-diphenyl-9-fluorenyl)hafniumdimethyl
Propylen-2-cyclopentadienyl-2-(2,7-dimethyl-9-fluorenyl)titandimethyl
Propylen-2-(3-methylcyclopentadienyl)-2-(2,7-dibutyl-9-fluorenyl)hafniumdimethyl
Propylen-2-(3-tert-butylcyclopentadienyl)-2-(2,7-dibutyl-9-fluorenyl)titandimethyl
Propylen-2-(3-trimethylsilylcyclopentadienyl)-2-(3,6-di-tert-butyl-9-fluorenyl)titandimethyl
Propylen-2-cyclopentadienyl-2-[2,7-bis(3-buten-1-yl)-9-fluorenyl]hafniumdimethyl
Propylen-2-cyclopentadienyl-2-(3-tert-butyl-9-fluorenyl)titandimethyl
Propylen-2,2-bis(tetrahydroindenyl)hafniumdimethyl
Propylen-2,2-bis(2-methylindenyl)hafniumdimethyl
Propylen-2,2-bis(2-ethylindenyl)titandimethyl
Propylen-2,2-bis(2-methyl-4,5-benzoindenyl)titandimethyl
Propylen-2,2-bis(2-ethyl-4,5-benzoindenyl)hafniumdimethyl
Propylen-2,2-bis(4,5-dihydro-8-methyl-7H-cyclopent[e]acenaphthylen-7-yliden)hafniumdimethyl
Propylen-2-(2-methyl-4,5-benzoindenyl)-2-(2-methyl-4-phenylindenyl)hafniumdimethyl
Propylen-2-(2-ethyl-4,5-benzoindenyl)-2-(2-methyl-4-phenylindenyl)titandimethyl
Propylen-2-(2-methyl-4,5-benzoindenyl)-2-(2-ethyl-4-phenylindenyl)hafniumdimethyl
Propylen-2-(2-ethyl-4,5-benzoindenyl)-2-(2-ethyl-4-naphthylindenyl)titandimethyl
Propylen-2-(2-methylindenyl)-2-(4-phenylindenyl)hafniumdimethyl
Propylen-2,2-bis(2-methyl-4-phenylindenyl)titandimethyl
Propylen-2,2-bis(2-ethyl-4-phenylindenyl)hafniumdimethyl
Propylen-2,2-bis(2-methyl-4,6-diisopropylindenyl)titandimethyl
Propylen-2,2-bis(2-ethyl-4,6-diisopropylindenyl)hafniumdimethyl
Propylen-2,2-bis(2-methyl-4-naphthylindenyl)titandimethyl
Propylen-2,2-bis(2-ethyl-4-naphthylindenyl)titandimethyl
1,6-Bis[methylsilylbis(2-methyl-4-phenylindenyl)hafniumdimethyl]hexan
1,6-Bis[methylsilylbis(2-methyl-4,5-benzoindenyl)titandimethyl]hexan
1,6-Bis[methylsilylbis(2-ethyl-4-phenylindenyl)hafniumdimethyl]hexan
1,6-Bis[methylsilylbis(2-methyl-4-naphthylindenyl)titandimethyl]hexan
1,6-Bis[methylsilylbis(2-methyl-4,6-diisopropylindenyl)hafniumdimethyl]hexan
1,6-Bis[methylsilyl(2-methyl-4-phenylindenyl)(4,5-benzoindenyl)titandimethyl]hexan
1-[Methylsilylbis(tetrahydroindenyl)hafniumdimethyl]-6-[ethylstannyl(cyclopentadienyl)-(fluorenyl)titandimethyl]hexan
1,6-Disila-1,1,6,6-tetramethyl-1,6-bis[methylsilylbis(2-methyl-4-phenylindenyl)hafnium-dimethyl]hexan
1,4-Disila-1,4-bis[methylsilylbis(2-methyl-4-phenylindenyl)hafniumdimethyl]cyclohexan
[1,4-Bis(1-indenyl)-1,1,4,4-tetramethyl-1,4-disilabutan]bis(pentamethylcyclopentadienylhafniumdimethyl)
[1,4-Bis(9-fluorenyl)-1,1,4,4-tetramethyl-1,4-disilabutan]bis(cyclopentadienylhafniumdimethyl)
[1,4-Bis(1-indenyl)-1,1,4,4-tetramethyl-1,4-disilabutan]bis(cyclopentadienyltitandimethyl)
[1-(1-indenyl)-6-(2-phenyl-1-indenyl)-1,1,6,6-tetraethyl-1,6-disila-4-oxahexan]bis(tert-butylcyclopentadienyltitandimethyl)
[1,10-Bis(2,3-dimethyl-1-indenyl)-1,1,10,10-tetramethyl-1, 10-digermadecan]bis(2-methyl-4-phenylindenylhafniumdimethyl)
(1-Methyl-3-tert-butylcyclopentadienyl)(1-phenyl-4-methoxy-7-chlorofluorenyl)titandimethyl
(4,7-Dichloroindenyl)(3,6-dimesitylfluorenyl)titandimethyl
Bis(2,7-di-tert-butyl-9-cyclohexylfluorenyl)hafniumdimethyl
(2,7-Dimesitylfluorenyl)[2,7-bis(1-naphthyl)fluorenyl]hafniumdimethyl
Dimethylsilylbis(fluorenyl)titandimethyl
Dibutylstannylbis(2-methylfluorenyl)hafniumdimethyl
1,1,2,2-Tetraethyldisilandiyl(2-methylindenyl)(4-phenylfluorenyl)titandimethyl
Propylen-1-(2-indenyl)-2-(9-fluorenyl)hafniumdimethyl
1,1-Dimethyl-1-silaethylenbis(fluorenyl)titandimethyl
[4-(Cyclopentadienyl)-4,7,7-trimethyl(tetrahydroindenyl)]titandimethyl
[4-(Cyclopentadienyl)-4,7-dimethyl-7-phenyl(5,6-dimethyltetrahydroindenyl)]hafniumdimethyl
[4-(Cyclopentadienyl)-4,7-dimethyl-7-(1-naphthyl)(7-phenyltetrahydroindenyl)]titandimethyl
[4-(Cyclopentadienyl)-4,7-dimethyl-7-butyl(6,6-diethyltetrahydroindenyl)]hafniumdimethyl
[4-(3-tert-Butylcyclopentadienyl)-4,7,7-trimethyl(tetrahydroindenyl)]hafniumdimethyl
[4-(1-Indenyl)-4,7,7-trimethyl(tetrahydroindenyl)]titandimethyl
Bis(cyclopentadienyl)zirkoniumdichlorid
Bis(indenyl)zirkoniumdichlorid
Bis(fluorenyl)zirkoniumdichlorid
(Indenyl)(fluorenyl)zirkoniumdichlorid
Bis(cyclopentadienyl)titandichlorid
Dimethylsilandiylbis(indenyl)zirkoniumdichlorid
Dimethylsilandiylbis(tetrahydroindenyl)zirkoniumdichlorid
Dimethylsilandiylbis(cyclopentadienyl)(indenyl)zirkoniumdichlorid
Dimethylsilandiylbis(2-methylindenyl)zirkoniumdichlorid
Dimethylsilandiylbis(2-ethylindenyl)zirkoniumdichlorid
Dimethylsilandiylbis(2-methyl-4,5-benzoindenyl)zirkoniumdichlorid
Dimethylsilandiylbis(2-ethyl-4,5-benzoindenyl)zirkoniumdichlorid
Dimethylsilandiylbis(2-methyl-4-phenylindenyl)zirkoniumdichlorid
Dimethylsilandiylbis(2-ethyl-4-phenylindenyl)zirkoniumdichlorid
Dimethylsilandiylbis(2-methyl-4,6-düsopropyhndenyl)zirkoniumdichlorid
Ethylen-1,2-bis(indenyl)zirkoniumdichlorid
Ethylen-1,2-bis(tetrahydroindenyl)zirkoniumdichlorid
Ethylen-1,2-bis(2-methylindenyl)zirkoniumdichlorid
Ethylen-1,2-bis(2-ethylindenyl)zirkoniumdichlorid
Ethylen-1,2-bis(2-methyl-4,5-benzoindenyl)zirkoniumdichlorid
Ethylen-1,2-bis(2-methyl-4-phenylindenyl)zirkoniumdichlorid
Ethylen-1,2-bis(2-ethyl-4-phenylindenyl)zirkoniumdichlorid
Ethylen-1,2-bis(2-methyl-4,6-diisopropylindenyl)zirkoniumdichlorid
Propylen-2,2-bis(indenyl)zirkoniumdichlorid
Propylen-2,2-(cyclopentadienyl)(indenyl)zirkoniumdichlorid
Propylen-2,2-(cyclopentadoenyl)(fluorenyl)zirkoniumdichlorid
Bis(cyclopentadienyl)(η⁴-butadien)zirkonium
Bis(methylcyclopentadienyl)(η⁴-butadien)zirkonium
Bis(n-butyl-cyclopentadienyl)(η⁴-butadien)zirkonium
Bisindenyl(η⁴-butadien)zirkonium
(tert.butylamido)dimethyl(tetramethyl-η⁵-cyclopentadienyl)silan-(η⁴-butadien)zirkonium
Bis(2-methylbenzoindenyl)(η⁴-butadien)zirkonium
Dimethylsilandiylbis(2-methyl-indenyl)(η⁴-butadien)zirkonium
Dimethylsilandiylbisindenyl(η⁴-butadien)zirkonium
Dimethylsilandiylbis(2-methylbenzoindenyl)(η⁴-butadien)zirkonium
Dimethylsilandiyl(2-methylbenzoindenyl)(2-methyl-indenyl)(η⁴-butadien)zirkonium
Dimethylsilandiyl(2-methylbenzoindenyl)(2-methyl-4-phenylindenyl)(η⁴-butadien)zirkonium
Dimethylsilandiyl(2-methylindenyl)(4-phenylindenyl)(η⁴-butadien)zirkonium
Dimethylsilandiylbis(2-methyl-4-phenyl-indenyl)(η⁴-butadien)Zirkonium
Dimethylsilandiylbis(2-methyl-4,6-diisopropyl-indenyl)(η⁴-butadien)zirkonium
Dimethylsilandiylbis(2-methyl-4-naphthyl-indenyl)(η⁴-butadien)zirkonium
Isopropyliden(cyclopentadienyl)(fluorenyl)(η⁴-butadien)zirkonium
Isopropyliden(cyclopentadienyl)(indenyl)(η⁴-buladien)zirkonium
[4-η5-Cyclopentadienyl)-4,7,7-trimethyl-(η5-4, 5,6,7-tetrahydroindenyl)(η⁴-butadien)zirkonium
Dimethylsilandiylbis (2-methyl-indenyl) (η⁴ -butadien )zirkonium
Dimethyfsilandiylbisindenyl(η₄-butadien)zirkonium
Dimethylsilandiylbis(2-methylbenzoindenyl)(η⁴-butadien)zirkonium
Dimethylsilandiyl(2-methylbenzoindenyl)(2-methyl-indenyl)(η⁴-butadien)zirkonium
Dimethylsilandiyl(2-methylbenzoindenyl)(2-methyl-4-phenylindenyl)(η⁴)-butadien)zirkonium
Dimethylsilandiyl(2-methylindenyl)(4-phenylindenyl)(η⁴-butadien)zirkonium
Dimethylsilandiylbis(2-methyl-4-phenyl-indenyl)(η⁴-butadien)zirkonium
Dimethylsilandiylbis(2-methyl-4,6-diisopropyl-indenyl)(η⁴-butadien)zirkonium
Dimethylsilandiylbis(2-methyl-indenyl)(η⁴-butadien)zirkonium
Dimethylsilandiylbisindenyl(η⁴-butadien)zirkonium
Dimethylsilandilybis(2-methylbenzoidenyl)(η⁴-butadien)zirkonium
Dimethylsilandiyl(2-methylbenzoindenyl)(2-methyl-indenyl)(η⁴-butadien)zirkonium
Dimethylsilandiyl(2-methylbenzoindenyl)(2-methyl-4-phenylindenyl)(η⁴-butadien)zirkonium
Dimethylsilandiyl(2-methylindenyl)(4-phenylindenyl)(η⁴-butadien)zirkonium
Dimethylsilandiylbis(2-methyl-4-phenyl-indenyl)(η⁴-butadien)zirkonium
Dimethylsilandiylbis(2-methyl-4, 6-diisopropyl-indenyl)(η⁴-butadien)zirkonium
Dimethylsilandiylbis (2-methyl-4-naphthyl-indenyl) (η⁴-butad ien)zirkonium
Dimethylsilandiylbis(2-methyl-indenyl)(η⁴-butadien)zirkonium
Dimethylsilandiylbisindenyl(η⁴- butadien) zirkonium
Dimethylsilandiylbis(2-methylbenzoindenyl) (η⁴-butadien)zirkonium
Dimethylsilandiyl(2-methylbenzoindenyl) (2-methyl-indenyl) (η⁴-butadien)zirkonium
Dimethylsilandiyl(2-methylbenzoindenyl) (2-methyl-4-phenylindenyl) (η⁴-butadien)zirkonium
Dimethylsilandiyl(2-methylindenyl) (4-phenylindenyl) (η⁴-butadien)zirkonium
Dimethylsilandiylbis(2-methyl-4-phenyl-indenyl)(η⁴-butadien)zirkonium
Dimethylsilandiylbis(2-methyl-4,6-diisopropyl-indenyl) (η⁴-butadien)zirkonium
Dimethylsilandiylbis(2-methyl-4-naphthyl-indenyl)(η⁴-butadien)zirkonium
Methylphenylmethylen-(fluorenyl) (cyclopentadienyl) (η⁴ -butadien) zirkonium
Diphenylmethylen-(fluorenyl) (cyclopentadienyl) (η⁴ -butadien)zirkonium
Isopropyliden-(3-methylcyclopentadienyl)(fluorenyl)(η⁴-butadien)zirkonium
Dimethylsilandiyl-(3-tert-Butylcyclopentadienyl)(fluorenyl)(η⁴-butadien)zirkonium
Diphenylsilandiyl-(3-(trimethylsilyl)cyclopentadienyl)(fluorenyl)(η⁴-butadien)zirkonium
Phenylmethylsilandiylbis(2-methyl-indenyl)(η⁴-butadien)zirkonium
Phenylmethylsilandiylbisindenyl(η⁴-butadien)zirkonium
Phenylmethylsilandiylbis(2-methyl-4, 5-benzoindenyl)(η⁴-butadien)zirkonium
Phenylmethylsilandiyl(2-methyl-4,5-benzoindenyl)(2-methyl-indenyl)(η⁴-butadien)zirkonium
Phenylmethylsilandiyl(2-methyl-4,5-benzoindenyl)(2-methyl-4-phenylindenyl)(η⁴-butadien)zirkonium
Phenylmethylsilandiyl(2-methylindenyl)(4-phenylindenyl)(η⁴-butadien)zirkonium
Phenylmethylsilandiylbis(2-methyl-4-phenyl-indenyl)(η⁴-butadien)zirkonium
Phenylmethylsilandiylbis(2-ethyl-4-phenyl-indenyl)(η⁴-butadien)zirkonium
Phenylmethylsilandiylbis(2-methyl-4,6-diisopropyl-indenyl)(η⁴-butadien)zirkonium
Phenylmethylsilandiylbis(2-methyl-4-naphthyl-indenyl)(η⁴-butadien)zirkonium
Ethylenbis(2-methyl-indenyl)(η⁴-butadien)zirkonium
Ethylenbisindenyl(η⁴ -butadien)zirkonium
Ethylenbis(2-methyl-4,5-benzoindenyl) (η⁴-butadien)zirkonium
Ethylen(2-methyl-4,5-benzoindenyl) (2-methyl-indenyl) (η⁴-butadien)zirkonium
Ethylen(2-methyl-4,5-benzoindenyl)(2-methyl-4-phenylindenyl)(η⁴-butadien)zirkonium
Ethylen(2-methylindenyl)(4-phenylindenyl)(η⁴-butadien)zirkonium
Ethylenbis(2-methyl-4,5-benzoindenyl)(η⁴-butadien)zirkonium
Ethylenbis(2-methyl-4-phenyl-indenyl)(η⁴-butadien)zirkonium
Ethylenbis(2-methyl-4,6-diisopropyl-indenyl)(η⁴-butadien)zirkonium
Ethylenbis(2-methyl-4-naphthyl-indenyl)(η⁴-butadien)zirkonium
Ethylenbis(2-ethyl-4-phenyl-indenyl)(η⁴-butadien)zirkonium
Ethylenbis(2-ethyl-4,6-diisopropyl-indenyl)(η⁴-butadien)zirkonium
Ethylenbis(2-ethyl-4-naphthyl-indenyl)(η⁴-butadien)zirkonium
Dimethylsilandiylbis(2-ethyl-4-phenyl-indenyl)(η⁴-butadien)zirkonium
Dimethylsilandiylbis(2, 3, 5-trimethylcyclopentadienyl)(η⁴-butadien)zirkonium
1.6-{Bis[methylsilyl-bis(2-methy)-4-phenyl-indenyl)(η⁴-butadien)zirkonium]}hexan
1,6-{Bis[methylsilyl-bis(2-ethyl-4-phenyl-indenyl)(η⁴-butadien)zirkonium]}hexan
1,6-{Bis[methylsilyl-bis(2-methyl-4-naphthyl-indenyl)(η⁴-butadien)zirkonium]}hexan
1,6-{Bis[methylsilyl-bis(2-methyl-4,5-benzoindenyl)(η⁴-butadien)-zirkonium]}hexan
1,6-{Bis[methylsilyl-(2-methyl-4-phenyl-indenyl)(2-methyl-indenyl)(η⁴-butadien)zirkonium]}hexan
1,2-{Bis[methylsilyl-bis(2-methyl-4-phenyl-indenyl)(η⁴-butadien)zirkonium]}ethan
1,2-{Bis[methylsilyl-bis(2-ethyl-4-phenyl-indenyl)(η⁴-butadien)zirkonium]}ethan
1,2-{Bis[methylsilyl-bis(2-methyl-4-naphthyl-indenyl)(η⁴-butadien)-zirkonium]}ethan
1,2-{Bis[methylsilyl-bis(2-methyl-4,5-benzoindenyl)(η⁴-butadien)zirkonium]}ethan
1,2-(Bis[methylsilyl-(2-methyl-4-phenyl-indenyl)(2-methyl-indenyl)(η⁴-butadien)zirkonium]}ethan.

Die vorliegende Erfindung betrifft auch einen Katalysator enthaltend mindestens eine erfindungsgemäße Übergangsmetallverbindung als Co-Katalysator und mindestens ein Metallocen, sowie ein Verfahren zur Herstellung eines Olefinpolymers durch Polymerisation mindestens eines Olefins in Gegenwart des erfindungsgemäßen Katalysators. Die Polymerisation kann eine Homo- oder eine Copolymerisation sein.

Bevorzugt werden Olefine der Formel R^{α}-CH=CH-R^{β} polymerisiert, worin R^{α} und R^{β} gleich oder verschieden sind und ein Wasserstoffatom, ein Halogenatom, eine Alkoxy-, Hydroxy-, Alkylhydroxy-, Aldehyd, Carbonsäure- oder Carbonsäureestergruppe oder einen gesättigten oder ungesättigten Kohlenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonsäure- oder Carbonsäureestergruppe substituiert sein kann, oder R^{α} und R^{β} mit den sie verbindenden Atomen einen oder mehrere Ringe bilden. Beispiele für solche Olefine sind 1-Olefine wie Ethylen, Propylen, 1-Buten, 1-Hexen, 4-Methyl-1-penten, 1-Octen, Styrol, cyclische Olefine wie Norbornen, Vinylnorbornen, Tertacyclododecen, Ethylidennorbornen, Diene wie 1,3-Butadien oder 1,4-Hexadien, Biscyclopentadien oder Methacrylsäuremethylester.

Insbesondere werden Propylen oder Ethylen homopolymerisiert, Ethylen mit einem oder mehreren C₃-C₂₀-1-Olefinen, insbesondere Propylen, und /oder einem oder mehreren C₄-C₂₀-Diene, insbesondere 1,3-Butadien, copolymerisiert oder mit Norbornen und Ethylen copolymerisiert.
Die Polymerisation wird bevorzugt bei einer Temperatur von -60 bis 300°C, besonders bevorzugt 30 bis 250°C, durchgeführt. Der Druck beträgt 0,5 bis 2500 bar, bevorzugt 2 bis 1500 bar. Die Polymerisation kann kontinuierlich oder diskontinuierlich, ein- oder mehrstufig, in Lösung, in Suspension, in der Gasphase oder in einem überkritischem Medium durchgeführt werden.

Die erfindungsgemäße Verbindung kann alleine oder zusammen mit einem Metallocen auf Träger aufgebracht werden. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch Polyolefinpulver in feinverteilter Form.

Das geträgerte System kann als Pulver oder noch Lösemittel behaftet wieder resuspendiert und als Suspension in einem inerten Suspensionsmittel in das Polymerisationssystem eindosiert werden.

Mit Hilfe des erfindungsgemäßen Katalysators kann eine Vorpolymerisation erfolgen. Zur Vorpolymerisation wird bevorzugt das (oder eines der) in der Polymerisation eingesetzte(n) Olefin(e) verwendet.

Zur Herstellung von Olefinpolymeren mit breiter Molekulargewichtsverteilung werden bevorzugt Katalysatorsysteme verwendet, die zwei oder mehr verschiedene Metallocene enthalten.

Zur Entfernung von im Olefin vorhandenen Katalysatorgiften ist eine Reinigung mit einem Aluminiumalkyl, beispielsweise Trimethylaluminium, Triethylaluminium oder Triisobutyl-aluminium vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder getrennt.

Als Molmassenregler und/oder zur Steigerung der Aktivität wird, falls erforderlich, Wasserstoff zugegeben. Der Gesamtdruck im Polymerisationssystem beträgt 0.5 bis 2500 bar, bevorzugt 2 bis 1500 bar. Dabei wird die erfindungsgemäße Verbindung in einer Konzentration, bezogen auf das Übergangsmetall von bevorzugt 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet.

Geeignete Lösemittel zur Darstellung sowohl der erfindungsgemäßen chemische Verbindung als auch des erfindungsgemäßen Katalysatorsystems sind aliphatische oder aromatische Lösemittel, wie beispielsweise Hexan oder Toluol, etherische Lösemittel, wie beispielsweise Terahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Vor der Zugabe des Katalysatorsystems, insbesondere des geträgerten Katalysatorsystems (enthaltend mindestens eine erfindungsgemäße chemische Verbindung, mindestens ein Metallocen, Trägermaterial und/oder ein Polyolefinpulver in feinverteilter Form) kann zusätzlich eine andere Aluminiumalkylverbindung wie beispielsweise Trimethylaluminium, Triethylaluminium, Triisobutylalumiunium, Trioctylaluminium oder Isoprenylalumiunium zur Inertisierung des Polymerisationssystems (beispielsweise zur Abtrennung vorhandener Katalysatorgifte im Olefin) in den Reaktor gegeben werden. Diese wird in einer Konzentration von 100 bis 0,01 mmol Al pro Kg Reaktorinhalt dem Polymerisationssystem zugesetzt. Bevorzugt werden Triisobutylaluminium und Triethylalumiunium in einer Konzentration von 10 bis 0.1 mmol Al pro Kg Reaktorinhalt. Dadurch kann bei der Synthese eines geträgerten Katalysatorsystems das molar Al/M-Verhältnis klein gewählt werden.

Die nachfolgenden Beispiele dienen zur näheren Erläuterung der Erfindung.

Allgemeine Angaben: Herstellung und Handhabung organometallischer Verbindungen erfolgten unter Ausschluß von Luft und Feuchtigkeit unter Argonschutz (Schlenk-Technik). Alle benötigten Lösemittel wurden vor Gebrauch durch mehrstündiges Sieden über geeignete Trockenmittel und anschließende Destillation unter Argon absolutiert.

### Beispiel 1: 1,4-Bis(dipentafluorophenylboran)-2,3,5,6-tetrafluorbenzol

1.54 g (5 mmol) Dibromotetrafluorobenzol werden in 40 ml n-Hexan gelöst und auf -78°C gekühlt. Zu dieser Lösung werden 6.4 ml n-BuLi (10 mmol) langsam zugetropft und 1 Std. lang gerührt. Anschließend werden 1.90 g (5 mmol) Bis(pentafluorophenyl)borylchlorid in 40 ml n-Hexan gelöst und ebenfalls zu der obigen Lösung zugetropft. Die erhaltene Suspension wird langsam auf Raumtemperatur erwärmt, wobei sich ein weißer Niederschlag abscheidet. Dieser wird durch Filtration abgetrennt und das erhaltene Filtrat im Vakuum bis zur Trockne eingeengt. Die Ausbeute des so erhaltenen, als gelbes Öl anfallendes, 1,4-Bis(dipentafluor-phenylboryl)-2,3,5,6-tetrafluorobenzol beträgt 81 %.

### Beispiel 2: Bis(dipentafluorophenylboryl)acetylen

1.06 g (5 mmol) Bis(chlorodimethylsilyl)acetylen werden in 40 ml n-Hexan gelöst und auf -78°C gekühlt. Zu dieser Lösung werden langsam 1.90 g (5 mmol) Bis(pentafluorophenyl)-borylchlorid in 40 ml n-Hexan zugetropft. Es wird 1 Std. bei -78°C gerührt und anschließend langsam auf RT erwärmt. Lösemittel und entstandenes Dimethyldichlorosilan werden im Hochvakuum entfernt. Das verbleibende, gelbe Öl wird anschließend fraktioniert destilliert. Dabei fallen 2.2 g (61.7 % Ausbeute) Bis(dipentafluorophenylboryl)acetylen an.

### Beispiel 3: [(Dipentafluorophenylbor)ethinyl]trimethylsilan

1.12 g (5 mmol) (lodoethinyl)trimethylsilan werden in 40 ml Tetrahydrofuran gelöst und auf -78°C gekühlt. Zu dieser Lösung werden 3.2 ml n-BuLi (5 mmol, 1.6 M in Hexan) langsam zugetropft und 2 Std. lang gerührt. Anschließend werden 1.90 g (5 mmol) Bis(pentafluorophenyl)borylchlorid in 40 ml Tetrahydrofuran gelöst und ebenfalls zu der obigen Lösung zugetropft. Die erhaltene Suspension wird langsam auf Raumtemperatur erwärmt, wobei sich ein weißer Niederschlag abscheidet. Dieser wird durch Filtration abgetrennt. Von dem erhaltenen Filtrat wird das Lösemittel im Vakuum entfernt. Das verbleibende, gelbe Öl wird anschließend fraktioniert destilliert. Dabei fallen 1.66 g (75 % Ausbeute) [(Dipentafluorophenylbor)ethinyl]trimethylsilan an.

### Beispiel 4: [(Diphenylphosphino)ethinyl]-dipentafluorophenylboran

1.05 g (5 mmol) Diphenyl-ethinylphosphan werden in 40 ml Diethylether gelöst und auf -78°C gekühlt. Zu dieser Lösung werden 3.2 ml n-BuLi (5 mmol, 1.6 M in Hexan) langsam zugetropft und 2 Std. lang gerührt. Dabei erfolgt eine spontane Rot/Braunfärbung der Lösung. Anschließend werden 1.90 g (5 mmol) Bis(pentafluorophenyl)borylchlorid in 40 ml Tetrahydrofuran gelöst und zu der obigen Lösung zugetropft. Die erhaltene Suspension wird langsam auf Raumtemperatur erwärmt, wobei sich ein Niederschlag abscheidet. Dieser wird durch Filtration abgetrennt und das erhaltene Filtrat im Vakuum bis zur Trockne eingeengt. Die Ausbeute des so erhaltenen, als oranges Öl anfallende, [(Diphenylphosphino)ethinyl]-dipentafluorphenylborans beträgt 57 %.

### Beispiel 5: Triphenylcarbenium[(dipentafluorophenylboran)-2,3,5,6-tetrafluorophenyl]-tripentafluorophenylborat

0.62 g Brompentafluorbenzol (2.5 mmol) werden in 40 ml n-Hexan gelöst und bei -78°C mit 1.6 ml n-BuLi (2.5 mmol, 1.6 M in Hexan) versetzt. Die Suspension wird 1 Std. bei - 10°C gerührt. Anschließend werden 2.1 g (2.5 mmol) 1,4-Bis(dipentafluorophenylboryl)-2,3,5,6-tetrafluorbenzol in 40 ml n-Hexan zu der obigen Lösung langsam zugetropft. Die erhaltene Suspension wird langsam auf Raumtemperatur erwärmt, wobei sich ein Niederschlag abscheidet. Dieser wird durch Filtration abgetrennt und das erhaltene Filtrat im Vakuum bis zur Trockne eingeengt. Das so erhaltene Lithiumsalz wird in 40 ml n-Pentan aufgenommen und bei Raumtemperatur mit 0.7 g (2.5 mmol) Triphenylmethylchlorid versetzt. Nach 8 Std. Rühren wird der orange Feststoff filtriert. Das Filtrat wird in Methylenchlorid extrahiert, um das entstandenen LiCl abzutrennen. Fällung mit n-Pentan ergibt einen orangen Feststoff (Ausbeute 56%).

### Beispiel 6:

10 g SiO₂ (MS 3030, Fa. PQ, getrocknet bei 600°C im Argonstrom) wurden in 50 ml Toluol suspendiert und tropfenweise unter Rühren langsam mit einer Lösung von 100 mg (0,229 mmol) Dimethylsilandiylbis(2-methylindenyl)zirkoniumdimethyl und 128 mg (0,153 mmol) 1,4Bis(dipentafluorophenylboran)-2,3,5,6-tetrafluorobenzol in 3 ml Toluol versetzt. Man ließ 1 h bei Raumtemperatur rühren und entfemte dann das Lösungsmittel im Ölpumpenvakuum bis zur Gewichtskonstanz. Zum Einschleusen in das Polymerisationssystem wurden 1 g des geträgerten Katalysators in 30 cm³ Exxsol resuspendiert.

### Polymerisation:

Parallel dazu wurde ein trockener 16-dm3-Reaktor zunächst mit Stickstoff und anschließend mit Propylen gespült und mit 10 dm³ flüssigem Propylen befüllt. Dann wurden 0,5 cm³ einer 20%igen Triisobutylaluminiumlösung in Varsol mit 30 cm3 Exxsol verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Polymer wurde im Vakuumtrockenschrank getrocknet. Es resultierten 1,4 kg Polypropylen-Pulver. Der Reaktor zeigte keine Beläge an Innenwand oder Rührer. Die Katalysatoraktivität betrug 144 kg PP/g Metallocen x h.

### Beispiel 7:

Zu einer Lösung von 100 mg (0,229 mmol) Dimethylsilandiylbis(2-methylindenyl)zirkoniumdimethyl und 143 mg (0,114 mmol) Triphenylcarbenium[(dipentafluorophenylboran)-2,3,5,6-tetrafluorophenyl]-tripentafluorophenylborat in 50 ml Toluol werden portionsweise 10 g SiO₂ (MS 3030, Fa. PQ, getrocknet bei 600°C im Argonstrom) zugegeben. Man ließ 1 h bei Raumtemperatur rühren und entfernte dann das Lösungsmittel im Ölpumpenvakuum bis zur Gewichtskonstanz. Zum Einschleusen in das Polymerisationssystem wurden 1 g des geträgerten Katalysators in 30 cm³ Exxsol resuspendiert.

### Polymerisation:

Parallel dazu wurde ein trockener 16-dm3-Reaktor zunächst mit Stickstoff und anschließend mit Propylen gespült und mit 10 dm³ flüssigem Propylen befüllt.Dann wurden 0,5 cm³ einer 20%igen Triisobutylaluminiumlösung in Varsol mit 30 cm³ Exxsol verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Polymer wurde im Vakaumtrockenschrank getrocknet. Es resultierten 1,8 kg Polypropylen-Pulver. Der Reaktor zeigte keine Beläge an Innenwand oder Rührer. Die Katalysatoraktivität betrug 186 kg PP/g Metallocen x h.

## Patentansprüche

1. Verbindung der Formel (1), 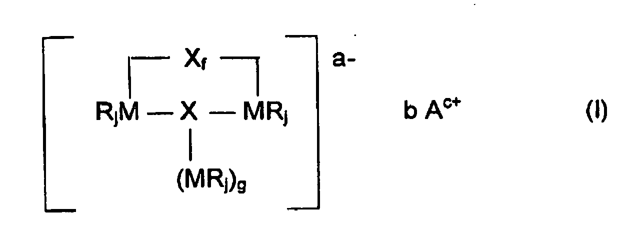 worin,
R unabhängig voneinander gleich oder verschieden ein Halogenatom oder ein halogenierter C₁-C₄₀-Kohlenwasserstoffrest sind,
X unabhängig voneinander gleich oder verschieden eine C₁-C₄₀-Halogen-Alkylen-, C₆-C₄₀-Arylen-, C₆-C₄₀- Halogen-Arylen-, C₇-C₄₀-Arylalkylen- oder C₇-C₄₀-Halogen-Arylalkylen-, C₂-C₄₀-Alkinylen-, C₂-C₄₀-Halogen-Alkinylen-, C₂-C₄₀-Alkenylen- oder C₂-C₄₀-Halogen-Alkenylen-Gruppe sind,
M Bor bedeutet,
a eine ganze Zahl von 0 bis 10 ist, b eine ganze Zahl von 0 bis 10 ist, c eine ganze Zahl von 0 bis 10 ist und a = b · c ist,
f gleich 0 oder 1 ist,
g gleich 0 oder 1 ist,
j 2 oder 3 ist und
A ein Kation der Gruppe Ia, IIa, IIIa des Periodensystems der Elemente, ein Carbenium-, Oxonium- oder Sulfonium-Kation oder eine quartäre Ammonium-Verbindung ist.

2. Verbindung der Formel I gemäß Anspruch 1,worin
R unabhängig voneinander gleich oder verschieden ein Halogenatom oder ein C₁-C₄₀-Kohlenwasserstoffrest, der mit Fluor halogeniert ist, sind.

3. Verbindung der Formel I gemäß Anspruch 1 oder 2, worin
R unabhängig voneinander gleich oder verschieden eine C₁-C₄₀-Halogen-Alkyl-, C₆-C₄₀- Halogen-Aryl-, oder C₇-C₄₀-Halogen-Arylalkyl sind.

4. Verbindung der Formel I gemäß einem oder mehreren der Ansprüche 1 bis 3, worin
R eine halogenierte C₁-C₃₀-Alkylgruppe oder C₆-C₃₀-Arylgruppe sind oder eine halogenierte C₆-C₃₀-Arylengruppe, C₂-C₃₀-Alkenylengruppe oder C₂-C₃₀-Alkinylengruppe sind,
a, b und c gleich 0,1 oder 2 sind und
A ein Carbenium-Ion oder ein quartäres Ammonium-Ion ist.

5. Verfahren zur Herstellung einer Verbindung der Formel I gemäß einem oder mehreren der Ansprüche 1 bis 4, worin eine Formel YXY in Gegenwart einer Base mit Verbindungen der Formel MRjY und RY umgesetzt wird, und das Reaktionsprodukt mit einer Verbindung der Formel AY umgesetzt wird, wobei Y eine Abgangsgruppe ist und Y, M, R, j und A wie in Anspruch 1 definiert sind.

6. Katalysatorsystem, enthaltend
a) mindestens eine Verbindung der Formel (I'), 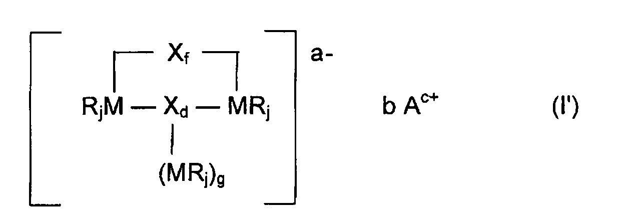 worin,
R unabhängig voneinander gleich oder verschieden ein Halogenatom oder eine C₁-C₄₀-kohlenstoffhaltige Gruppe sind,
X unabhängig voneinander gleich oder verschieden eine C₁-C₄₀-Halogen-Alkylen-, C₆-C₄₀-Arylen-, C₆-C₄₀- Halogen-Arylen-, C₇-C₄₀-Arylalkylen- oder C₇-C₄₀-Halogen-Arylalkylen-, C₂-C₄₀-Alkinylen-, C₂-C₄₀-Halogen-Alkinylen-, C₂-C₄₀-Alkenylen- oder C₂-C₄₀-Halogen-Alkenylen-Gruppe sind,
M Bor bedeutet,
a eine ganze Zahl von 0 bis 10 ist, b eine ganze Zahl von 0 bis 10 ist, c eine ganze Zahl von 0 bis 10 ist und a = b · c ist,
d gleich 0 oder 1 ist,
f gleich 0 oder 1 ist,
g gleich 0 oder 1 ist,
j 2 oder 3 ist und
A ein Kation der Gruppe la, IIa, IIIa des Periodensystems der Elemente, ein Carbenium-, Oxonium- oder Sulfonium-Kation oder eine quartäre Ammonium-Verbindung ist, und
b) mindestens ein Metallocen.

7. Katalysatorsystem gemäß Anspruch 6, zusätzlich enthaltend einen Träger.

8. Verwendung einer Verbindung der Formel I gemäß einem oder mehreren der Ansprüche 1 bis 4 zur Herstellung eines Katalysatorsystems gemäß Anspruch 6 oder 7.

9. Verfahren zur Herstellung eines Olefinpolymers durch Polymerisation mindestens eines Olefins in Gegenwart eines Katalysatorsystems gemäß Anspruch 6 oder 7.

10. Verwendung einer Verbindung der Formel I gemäß einem oder mehreren der Ansprüche 1 bis 4 zur Herstellung eines Olefinpolymers.

## Claims

1. A compound of the formula (I), 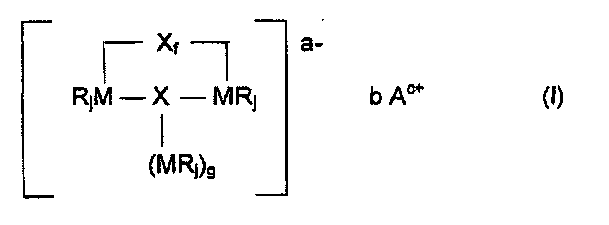 where
R are, independently of one another, identical or different and are each a halogen atom or a halogenated C₁-C₄₀-hydrocarbon radical,
X are, independently of one another, identical or different and are each a C₁-C₄₀-haloalkylene, C₆-C₄₀-arylene, C₆-C₄₀-haloarylene, C₇-C₄₀-arylalkylene or C₇-C₄₀-haloarylalkylene, C₂-C₄₀-alkynylene, C₂-C₄₀-haloalkynylene, C₂-C₄₀-alkenylene or C₂-C₄₀-haloalkenylene group,
M is boron,
a is an integer from 0 to 10, b is an integer from 0 to 10, c is an integer from 0 to 10 and a = b - c,
f is 0 or 1,
g is 0 or 1,
j is 2 or 3 and
A is a cation of group Ia, IIa, IIIa of the Periodic Table of the Elements, a carbenium, oxonium or sulfonium cation or a quaternary ammonium compound.

2. A compound of the formula I as claimed in claim 1, wherein
R are, independently of one another, identical or different and are each a halogen atom or a C₁-C₄₀-hydrocarbon radical which is halogenated by fluorine.

3. A compound of the formula I as claimed in claim 1 or 2, wherein
R are, independently of one another, identical or different and are each a C₁-C₄₀-haloalkyl, C₆-C₄₀-haloaryl or C₇-C₄₀-haloarylalkyl.

4. A compound of the formula I as claimed in one or more of claims 1 to 3, wherein
R are each a halogenated C₁-C₃₀-alkyl group or C₆-C₃₀-aryl group or a halogenated C₆-C₃₀-arylene group, C₂-C₃₀-alkenylene group or C₂-C₃₀-alkynylene group,
a, b and c are 0, 1 or 2 and
A is a carbenium ion or a quaternary ammonium ion.

5. A process for preparing a compound of the formula I as claimed in one or more of claims 1 to 4, which comprises reacting a formula YXY with compounds of the formulae MRjY and RY in the presence of a base and reacting the reaction product with a compound of the formula AY, where Y is a leaving group and Y, M, R, j and A are as defined in claim 1.

6. A catalyst system comprising
a) at least one compound of the formula (I'), 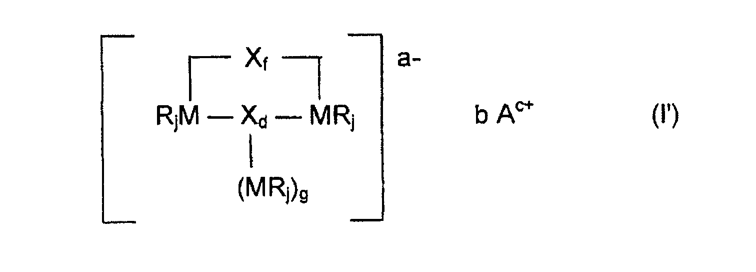 where
R are, independently of one another, identical or different and are each a halogen atom or a C₁-C₄₀-carbon-containing group,
X are, independently of one another, identical or different and are each a C₁-C₄₀-haloalkylene, C₆-C₄₀-arylene, C₆-C₄₀-haloarylene, C₇-C₄₀-arylalkylene or C₇-C₄₀-haloarylalkylene, C₂-C₄₀-alkynylene, C₂-C₄₀-haloalkynylene, C₂-C₄₀-alkenylene or C₂-C₄₀-haloalkenylene group,
M is boron,
a is an integer from 0 to 10, b is an integer from 0 to 10, c is an integer from 0 to 10 and a = b - c,
d is 0 or 1,
f is 0 or 1,
g is 0 or 1,
j is 2 or 3 and
A is a cation of group Ia, IIa, IIIa of the Periodic Table of the Elements, a carbenium, oxonium or sulfonium cation or a quaternary ammonium compound, and
b) at least one metallocene.

7. The catalyst system as claimed in claim 6 further comprising a support.

8. The use of a compound of the formula I as claimed in one or more of claims 1 to 4 for preparing a catalyst system as claimed in claim 6 or 7.

9. A process for preparing an olefin polymer by polymerization of at least one olefin in the presence of a catalyst system as claimed in claim 6 or 7.

10. The use of a compound of the formula I as claimed in one or more of claims 1 to 4 for preparing an olefin polymer.

## Revendications

1. Composé de formule (I), 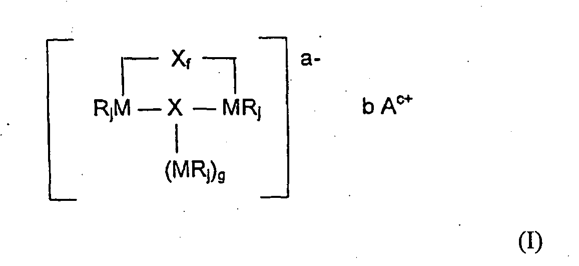 dans laquelle
les R, indépendamment les uns des autres, qu'ils soient identiques ou différents, représentent un atome d'halogène ou un radical d'hydrocarbure en C₁ à C₄₀ halogéné,
les X, indépendamment les uns des autres, qu'ils soient identiques ou différents, représentent un groupe halogéno-alkylène en C₁ à C₄₀, un groupe arylène en C₆ à C₄₀, halogéno-arylène en C₆ à C₄₀, arylalkylène en C₇ à C₄₀, ou halogéno-arylalkylène en C₇ à C₄₀, un groupe alcynylène en C₂ à C₄₀, halogénoalcynylène en C₂ à C₄₀, alcénylène en C₂ à C₄₀, ou halogéno-alcénylène en C₂ à C₄₀,
M représente le bore,
a est un nombre entier compris entre 0 et 10, b est un nombre entier compris entre 0 et 10, c est un nombre entier compris entre 0 et 10 et a = b x c,
f vaut 0 ou 1,
g vaut 0 ou 1,
j vaut 2 ou 3, et
A est un cation du groupe Ia, IIa, IIIa du système périodique des éléments, un cation carbonium, oxonium ou sulfonium ou un composé d'ammonium quaternaire.

2. Composé de formule I selon la revendication 1, dans laquelle
les R, indépendamment les uns des autres, qu'ils soient identiques ou différents, représentent un atome d'halogène ou un radical hydrocarbure en C₁ à C₄₀, qui est halogéné avec du fluor.

3. Composé de formule I selon la revendication 1 ou 2, dans laquelle
les R, indépendamment les uns des autres, qu'ils soient identiques ou différents, représentent un groupe halogéno-alkyle en C₁ à C₄₀, un groupe halogéno-aryle en C₆ à C₄₀, ou un groupe halogéno-arylalkyle en C₇ à C₄₀.

4. Composé de formule I selon l'une ou plusieurs des revendications 1 à 3, dans laquelle
les R représentent un groupe alkyle en C₁ à C₃₀ halogéné ou un groupe aryle en C₆ à C₃₀, ou encore un groupe arylène en C₆ à C₃₀ halogéné, un groupe alcénylène en C₂ à C₃₀, ou un groupe alcynylène en C₂ à C₃₀,
a, b et c valent 0, 1 ou 2, et
A est un ion carbonium ou un ion ammonium quaternaire.

5. Procédé de préparation d'un composé de formule I selon l'une ou plusieurs des revendications 1 à 4, dans lequel on fait réagir une formule YXY en présence d'une base avec des composés de formule MRJY et RY, et dans lequel on fait réagir le produit réactionnel avec un composé de formule AY, dans laquelle Y est un groupe partant et Y, M, R, j et A sont tels que définis dans la revendication 1.

6. Système de catalyseur, comprenant :
a) au moins un composé de formule (I') 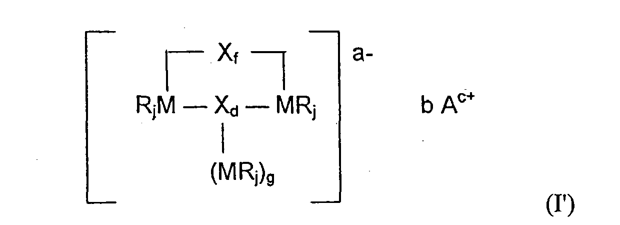 dans laquelle
les R, indépendamment les uns des autres, qu'ils soient identiques ou différents, représentent un atome d'halogène ou un groupe hydrocarboné en C₁ à C₄₀,
les X, indépendamment les uns des autres, qu'ils soient identiques ou différents, représentent un groupe halogéno-alkylène en C₁ à C₄₀, un groupe arylène en C₆ à C₄₀, halogéno-arylène en C₆ à C₄₀, arylalkylène en C₇ à C₄₀, ou halogéno-arylalkylène en C₇ à C₄₀, un groupe alcynylène en C₂ à C₄₀, halogénoalcynylène en C₂ à C₄₀, alcénylène en C₂ à C₄₀, ou halogéno-alcénylène en C₂ à C₄₀,
M représente le bore,
a est un nombre entier compris entre 0 et 10, b est un nombre entier compris entre 0 et 10, c est un nombre entier compris entre 0 et 10 et a = b x c,
d vaut 0 ou 1,
f vaut 0 ou 1,
g vaut 0 ou 1,
j vaut 2 ou 3, et
A est un cation du groupe Ia, IIa, IIIa du système périodique des éléments, un cation carbonium, oxonium ou sulfonium ou un composé d'ammonium quaternaire, et
b) au moins un métallocène.

7. Système de catalyseur selon la revendication 6, comprenant en outre un support.

8. Utilisation d'un composé de formule I selon l'une ou plusieurs des revendications 1 à 4, destiné à la fabrication d'un système de catalyseur selon la revendication 6 ou 7.

9. Procédé de préparation d'un polymère d'oléfine par polymérisation d'au moins une oléfine en présence d'un système de catalyseur selon la revendication 6 ou 7.

10. Utilisation d'un composé de formule I selon l'une ou plusieurs des revendications 1 à 4, destiné à la préparation d'un polymère d'oléfine.
